# EUROPÄISCHE PATENTSCHRIFT

(11) **EP 1 711 995 B1**
(45) Veröffentlichungstag und Bekanntmachung des Hinweises auf die Patenterteilung: **02.03.2011**
(21) Anmeldenummer: 04821187.4
(22) Anmeldetag: 01.12.2004
(51) Int. Cl.: H02M 3/155, H02P 7/00

(54) **MODUL UND VERFAHREN ZUM VER NDERN DER DREHZAHL EINES MOTORS**
MODULE AND METHOD FOR VARYING THE SPEED OF A MOTOR
MODULE ET PROCEDE POUR FAIRE VARIER LA VITESSE DE ROTATION D'UN MOTEUR

(30) Priorität: 27.01.2004 DE 102004003974
(43) Veröffentlichungstag der Anmeldung: 18.10.2006
(73) Patentinhaber: ROBERT BOSCH GMBH, 70442 Stuttgart (DE)
(72) Erfinder: KOCH, Stefan, 77876 Kappelrodeck (DE)
(86) Internationale Anmeldenummer: PCT/EP2004/053198
(87) Internationale Veröffentlichungsnummer: WO 2005/071823

(56) Entgegenhaltungen:
- EP-A- 0 391 065
- WO-A-03/005544
- US-A- 5 377 094
- US-A- 6 069 810
- US-A1- 2002 021 115

## Beschreibung

Die Erfindung betrifft ein Modul zum Verändern der Drehzahl eines Motors, insbesondere eines Gebläses einer Belüftung oder einer Heiz- und/oder Klimaanlage eines Kraftfahrzeuginnenraums. Des Weiteren betrifft die Erfindung ein Verfahren zum Verändern der Drehzahl eines derartigen Motors.

### Stand der Technik

In Kraftfahrzeugen sind im allgemeinen Belüftungssysteme sowie Heiz- und/oder Klimaanlagen vorhanden. Die Drehzahl deren Gebläse wird dabei generell über einen Motor gesteuert. Eine derartige Motorsteuerelektronik zur Ansteuerung von beispielsweise Motorkühlgebläsen ist ein sogenanntes Fan Control Modul (FCM). Bei einem Fan Control Modul werden über veränderliche Pulsweitenmod u-lierte Spannungen (PWM) bzw. einem Tastverhältnis die Spannungen an einem Gleichstrommotor (DC-Motor) und somit auch die Drehzahl eines Motorkühlgebläses gesteuert.

Bei herkömmlichen Fan Control Modulen ist der Betriebsspannungsbereich zwischen 8 Volt und 16 Volt festgelegt. In der moderneren Fahrzeugelektronik ist es jedoch häufig wünschenswert, auch einen Betrieb des Moduls bei Betriebsspannungen unterhalb von 8 Volt zu ermöglichen. Um den Anforderungen daran gerecht werden zu können, ist es teilweise sogar erforderlich, einen dauerhaften Betrieb des Mikrocontrollers ohne Reset bei Versorgungsspannungen bzw: Betriebsspannungen bis 3 Volt oder sogar 0 Volt über einen begrenzten Zeitraum zu ermöglichen und sicher zu gewährleisten. Derartige Anforderungen müssen zum Teil durch eine sehr große Kapazität am Eingang und/oder am Ausgang der 5 Volt-Versorgungsspannung realisiert werden, um die weitere Bestromung des Mikrocontrollers sicherstellen zu können.

Gegebenenfalls ist es dabei notwendig, dass andere Komponenten der Schaltung, welche ebenfalls mit der Betriebsspannung von 5 Volt versorgt werden sollen, für die Dauer einer auftretenden Unterspannung abgeschaltet werden müssen. Geht man beispielsweise von einem Versorgungsstrom des Mikrocontrollers von 10 mA und einer Mindestspannung am Reglerausgang von 4,5 V aus, so muss ein Kondensator mit einer Kapazität von 1000 µF dimensioniert werden.

Des Weiteren besteht die Gefahr, dass kurzzeitige Spannungseinbrüche der Versorgungsspannung bzw. der Betriebsspannung des Moduls, wie dies beispielsweise beim Blockieren des DC-Lüftermotors auftreten kann, auch durch einen Reset des Mikrocontrollers nicht selektiert und registriert werden können und somit nach einem sogenannten "Power-Up" nicht mehr bekannt sind. Dies trifft besonders dann zu, wenn weder im Mikrocontroller noch extern ein nicht-flüchtiger Speicher vorhanden ist, der derartige Vorgänge speichert. Analog gilt dies aber auch dann, wenn zwar ein derartiger Speicher vorhanden ist, für dessen Programmierung aber zuviel Zeit benötigt wird bzw. die Betriebsspannung beim Zusammenbruch bzw. beim Unterschreiten einer für das Modul erforderlichen Mindestbetriebsspannung nicht ausreichend lang für eine Programmierung des nicht-flüchtigen Speichers vorhanden ist.

Als Stand der Technick wird auch auf die US 2002/0021115 verwiesen.

### Vorteile der Erfindung

Ein erfindungsgemäßes Modul gemäß Anspruch 1, zum Verändern der Drehzahl eines Motors, insbesondere eines Gebläses einer Belüftung oder einer Heiz- und/oder Klimaanlage eines Kraftfahrzeuginnenraums, umfasst eine Spannungsquelle zur Spannungsversorgung des Moduls und des Motors und eine Verpolschutzvorrichtung, welche mit der Spannungsquelle und dem Motor elektrisch verbunden ist. Des Weiteren weist das Modul eine Speichereinheit zum Speichern elektrischer Energie, insbesondere einen Kondensator, auf, welche mit dem Motor und der Verpolschutzvorrichtung elektrisch verbunden ist, wobei die Speichereinheit, der Motor und die Verpolschutzvorrichtung derart geschaltet sind, dass bei einer zu niedrigen Betriebsspannungsversorgung des Moduls durch die Spannungsquelle ein Freilaufstrom des Motors zum Aufladen der Speichereinheit verwendbar ist und die erforderliche Betriebsspannung des Moduls erzeugbar ist.

Dadurch kann gewährleistet werden, dass der Betriebsspannungsbereich des Moduls wesentlich erweitert werden kann. Besonders an der unteren Grenze des Betriebsspannungsintervalls kann dadurch eine Erweiterung bis auf mindestens 5 Volt herunter ermöglicht werden. Darüber hinaus kann eine deutliche Funktionserweiterung des Moduls gewährleistet werden. Besonders im Bereich unterhalb der bisherigen Betriebsspannungsgrenze von 8 Volt kann hierbei ein Betrieb ohne Funktionseinschränkungen ermöglicht werden (Impuls 4 und 4b von ISO 7637-1). Ferner kann ein dauerhafter Betrieb des Mikrocontrollers bei Betriebsspannungen bis 3 Volt über einen großen Zeitraum gewährleistet werden.

Vorteilhafter Weise sind der Motor, die Verpolschutzvorrichtung und die Speichereinheit mit einem ersten Schaltungsknoten elektrisch verbunden. Bevorzugt ist die Verpolschutzvorrichtung in einem ersten Signalpfad angeordnet, der parallel zu einem zweiten Signalpfad, in dem der Motor angeordnet ist, geschaltet ist. Die Spannungsquelle, der Motor und die Verpolschutzvorrichtung sind in vorteilhafter Ausführung mit einem zweiten Schaltungsknoten elektrisch verbunden, wobei die Verpolschutzvorrichtung in besonders geeigneter Weise als Transistor ausgeführt ist. Der Transistor, insbesondere seine Source-Drain-Strecke, ist dabei in bevorzugter Ausführung parallel zum Motor geschaltet. Das Modul weist einen relativ einfachen und relativ bauteilarmen Schaltungsaufbau auf.

Als erfindungsgemäß erweist es sich weiterhin, wenn bei einer zu niedrigen Betriebsspannungsversorgung des Moduls durch die Spannungsquelle der erste Signalpfad über die Verpolschutzvorrichtung gesperrt ist und der Kondensator über den zweiten Signalpfad mittels des Freilaufstroms des Motors zur Erzeugung der erforderlichen Betriebsspannung des Moduls aufladbar ist.

Dadurch kann in effektiver Weise die Betriebsspannungsversorgung des Moduls gewährleistet werden und auch bei Spannungseinbrüchen der Spannungsquelle eine sichere Funktionsweise des Moduls, insbesondere auch bei sehr niedrigen Betriebsspannungen bis unterhalb von 8 Volt ermöglicht werden. Darüber hinaus kann durch die vorteilhaften Ausgestaltungen des erfindungsgemäßen Moduls zum Verändern der Drehzahl eines Motors eine Funktionserweiterung des Fan Control Moduls bei Unterspannung erreicht werden, indem durch geeignete Beschaltung der Speichereinheit und der Verpolschutzvorrichtung der Freilaufstrom des Motors derart genutzt werden kann, dass eine ausreichende Spannungsversorgung des Moduls im Falle einer Unterspannungsversorgung mittels der Spannungsquelle erreicht wird. Bei einer auftretenden Unterspannung wird der Freilaufstrom des Motors in effektiver und aufwandsarmer Weise genutzt, die Speichereinheit, insbesondere den Kondensator, zu laden bis die erforderliche Betriebsspannung des Moduls sichergestellt ist.

Bei einem erfindungsgemäßen Verfahren gemäß Anspruch 6 zum Verändern der Drehzahl eines Motors, insbesondere eines Gebläses einer Belüftung, oder einer Heiz- und/oder Klimaanlage eines Kraftfahrzeuginnenraums, werden ein Modul und der Motor mit einer von einer Spannungsquelle erzeugten Betriebsspannung versorgt und beim Unterschreiten der erforderlichen Betriebsspannung ein Freilaufstrom des Motors zum Erzeugen der für das Modul erforderlichen Betriebsspannung herangezogen, indem eine mit dem Motor elektrisch verbundene Speichereinheit zum Speichern elektrischer Energie, insbesondere ein Kondensator, mit dem Freilaufstrom geladen wird.

Dies gewährleistet, dass der Betriebsspannungsbereich des Moduls wesentlich erweitert werden kann. Das Betriebsspannungsintervall kann dabei besonders an der unteren Grenze erheblich erweitert werden und mindestens bis auf 5 Volt herab erweitert werden. Besonders im Bereich unterhalb der bisherigen Betriebsspannungsgrenze von 8 Volt kann hierbei ein Betrieb ohne Funktionseinschränkungen ermöglicht werden. Das erfindungsgemäße Verfahren ermöglicht auch, dass ein dauerhafter Betrieb des Mikrocontrollers bei Betriebsspannungen bis 3 Volt über einen großen Zeitraum durchgeführt werden kann.

In bevorzugter Weise wird die Betriebsspannung an eine Verpolschutzsteuerung angelegt und beim Unterschreiten der Betriebsspannung des Moduls der Ausgang der Verpolschutzsteuerung mit Massepotenzial verbunden und eine mit dem Ausgang elektrisch verbundende Verpolschutzvorrichtung sperrt einen ersten Signalpfad, in dem die Verpolschutzvorrichtung geschaltet ist. Vorteilhafter Weise wird die Speichereinheit mit dem Freilaufstrom des Motors, welcher in einem zweiten, zum ersten Signalpfad parallel geschalteten Signalpfad angeordnet ist, aufgeladen, wenn der erste Signalpfad durch die Verpolschutzvorrichtung gesperrt wird. Es kann vorgesehen sein, dass die Speichereinheit zum Speichern elektrischer Energie mittels des Freilaufstroms des Motors solange geladen wird, bis die Spannung an der Speichereinheit zumindest gleich der erforderlichen Betriebsspannung des Moduls ist.

Die vorteilhaften Weiterbildungen des erfindungsgemäßen Verfahrens ermöglichen eine erhebliche Funktionserweiterung des Fan Control Moduls bei Unterspannung, indem die Speichereinheit zum Speichern elektrischer Energie und die Verpolschutzvorrichtung derart geschaltet werden, dass der Freilaufstrom des Motors so genutzt werden kann, dass eine ausreichende Spannungsversorgung des Moduls im Falle einer Unterspannungsversorgung mittels der Spannungsquelle erreicht wird, indem im Falle einer Unterspannung die Speichereinheit mit dem Freilaufstrom des Motors geladen wird bis zumindest die erforderliche Mindestversorgungsspannung erreicht wird und dadurch eine Funktionseinschränkung der Elektronik des Moduls vermieden werden kann.

Weitere vorteilhafte Ausgestaltungen der Erfindung ergeben sich aus den übrigen, in den abhängigen Ansprüchen genannten Merkmalen.

### Zeichnungen

Die Erfindung wird nachfolgend in einem bevorzugten Ausführungsbeispiel anhand der zugehörigen Zeichnungen näher erläutert. Dabei zeigt:
- Figur 1: eine Schaltungsanordnung des erfindungsgemäßen Moduls; und
- Figur 2: Spannungsverläufe an einer Verpolschutzvorrichtung, an einer Versorgungsspannungsquelle und an einem Glättungskondensator des Moduls gemäß Figur 1.

### Beschreibung des Ausführungsbeispiels

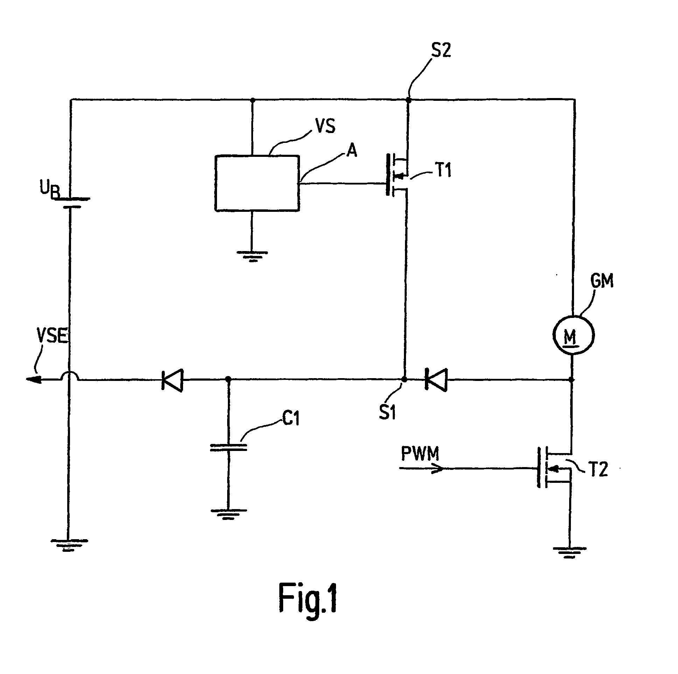

In Figur 1 ist ein Schaltplan eines erfindungsgemäßen Moduls zum Verändern der Drehzahl eines Motorkühlgebläses gezeigt. Ein Motor ist als Gleichstrommotor GM realisiert und ist mit einem ersten Schaltungsknoten S1 und einem zweiten Schaltungsknoten S2 des Moduls elektrisch verbunden. Das Modul umfasst eine Versorgungsspannungsquelle U_{B}, welche eine Gleichspannungsquelle ist, die eine Gleichspannung von 10 Volt liefert. Das Modul umfasst des Weiteren eine Verpolschutzsteuerung VS, die im Ausführungsbeispiel einen Komparator aufweist und deren Eingang mit der Versorgungsspannungsquelle U_{B} elektrisch verbunden ist.

Ein erster Ausgang A des Komparators bzw. der Verpolschutzsteuerung VS ist mit einem Gate-Anschluss einer Verpolschutzvorrichtung, welche im Ausführungsbeispiel als Transistor T1 realisiert ist, und ein zweiter Ausgang ist mit Massepotenzial elektrisch verbunden. Der Transistor T1 ist mit seinem Gate-Anschluss mit der Verpolschutzsteuerung VS, mit seinem Source-Anschluss mit dem zweiten Schaltungsknoten S2 und mit seinem Drain-Anschluss mit dem ersten Schaltungsknoten S1 elektrisch verbunden. Der Transistor T1 ist über seine Source-Drain-Strecke in einem ersten Signalpfad geschaltet, welcher parallel zu einem zweiten Signalpfad, in dem der Motor GM angeordnet ist, geschaltet ist.

Ferner ist mit dem ersten Schaltungsknoten S1 ein Glättungskondensator C_{GI} als Speichereinheit zum Speichern elektrischer Energie elektrisch verbunden. Des Weiteren ist der Glättungskondensator C_{GI} mit seiner zweiten Elektrode an Massepotenzial geführt. Des Weiteren ist der Motor GM mit dem Drain-Anschluss eines zweiten Transistors T2 elektrisch verbunden. Der Transistor T2 ist mit seinem Gate-Anschluss mit einer nicht dargestellten Spannungs-Pulsweitenmodulationseinheit PM elektrisch verbunden. Mittels dieser Spannungs-Pulsweitenmodulationseinheit PM wird die Spannungsversorgung der Motorendstufe pulsweitenmoduliert, indem die Ansteuerung der Motorendstufe mittels des getakteten Transistors T2 durchgeführt wird. Die Ansteuerung erfolgt dabei im Ausführungsbeispiel mit einer Frequenz von 20 kHz und einem Tastverhältnis von 50%. Die Tastverhältnisse können aber auch von 0 bis nis von 50%. Die Tastverhältnisse können aber auch von 0 bis 100% variiert werden, wobei bei einem Tastverhältnis von 100% der Motor GM voll an der Spannungsquelle U_{B} liegt. Ferner ist ein Signalpfad gezeigt, welcher zur Versorgungsspannungselektronik VSE führt.

Die Spannung an dem Gleichstrommotor GM und dadurch auch die Drehzahl des Motors GM wird über eine pulsweitenmodulierte Spannung bzw. einem Tastverhältnis gesteuert. Dies wird durch ein Takten des Transistors T2 durchgeführt, wodurch die erforderliche Pulsweite eingestellt bzw. das erforderliche Tastverhältnis erzielt werden kann. Wird das Tastverhältnis reduziert, reduziert sich die Drehzahl des Motors GM.

Wird die Versorgungsspannung bzw. Betriebsspannung des Moduls über die Spannungsquelle U_{B} geliefert und tritt im Betriebsverlauf eine Unterspannung, also eine Spannungsversorgung auf, die kleiner ist als die erforderliche Betriebsspannung des Moduls, die in etwa bei 8 Volt liegt, so wird die Spannung am Pluseingang des nicht dargestellten Komparators der Verpolschutzsteuerung VS kleiner als am Minuseingang des Komparators dieser Verpolschutzsteuerung VS. Dadurch wird der Ausgang A des Komparators bzw. der Verpolschutzsteuerung VS auf Massepotenzial geführt und der mit seinem Gate-Anschluss mit dem Ausgang A des Komparators der Verpolschutzsteuerung VS elektrisch verbundene Transistor T1 sperrt.

Dadurch ist der erste Signalpfad über die Source-Drain-Strecke des Transistors T1 zum ersten Schaltungsknoten S1 und damit zum Glättungskondensator C_{GI} gesperrt. Der Glättungskondensator C_{GI} wird nun durch den über den zweiten, zum ersten Signalpfad parallel geschalteten Signalpfad, in den der Motor GM geschaltet ist, fließenden Freilaufstrom des Motors GM geladen. Das Laden des Glättungskondensators C_{GI} wird solange durchgeführt, bis die Spannung am Glättungskondensator C_{GI} zumindest so groß ist, dass die erforderliche Betriebsspannung des Moduls erreicht wird.

Dadurch kann mittels des erfindungsgemäßen Moduls und dem erfindungsgemäßen Verfahren erreicht werden, dass in einfacher und aufwandsarmer Weise das Betriebsspannungsintervall des Moduls erweitert werden kann, insbesondere am unteren Ende des Versorgungsspannungsintervalls eine sichere Betriebsspannungsversorgung gewährleistet werden kann, indem die vorhandenen Bauelemente des Glättungskondensators C_{GI} in Verbindung mit dem Transistor T1 derart eingesetzt und geschaltet werden, dass in Verbindung mit dem Freilaufstrom des Motors GM die Unterspannung des Moduls effektiv kompensiert werden kann. Die Funktion des Fan Control Moduls kann dadurch bei einer auftretenden Unterspannung deutlich erweitert werden.

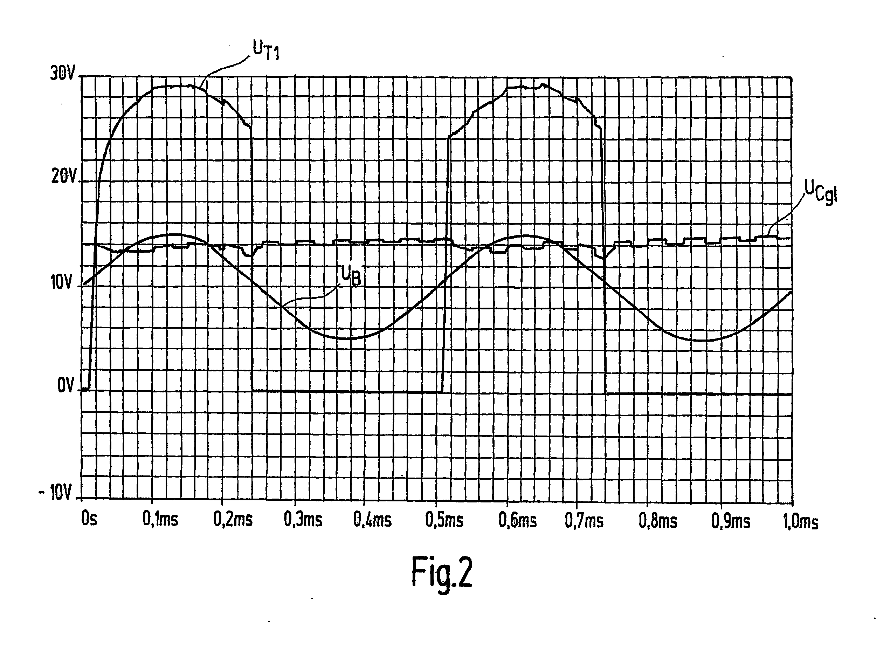

In Figur 2 sind schematische Signalverläufe dargestellt, die mittels einer Simulation erzielt wurden. In waagerechter Darstellung ist die Zeitachse und in senkrechter Darstellung die Spannung aufgetragen. Das Diagramm zeigt den Signalverlauf der Versorgungsspannung des Moduls, wie sie von der Gleichspannungsquelle U_{B} e r-zeugt wird. Des Weiteren ist der Spannungsverlauf U_{T1} am Gate-Anschluss des Transistors T1 und der Spannungsverlauf U_{CGI} am Glättungskondensator C_{GI} aufgezeigt. Der Spannungsverlauf am Glättungskondensator C_{GI}, kann wie zu erkennen ist, beim im Ausführungsbeispiel gewählten Wert von 14 Volt mit relativ geringen Schwankungen nahezu konstant gehalten werden.

## Patentansprüche

1. Modul zum Verändern der Drehzahl eines Motors (GM), insbesondere eines Gebläses einer Belüftung oder einer Heiz- und/oder Klimaanlage eines Kraftfahrzeuginnenraums, mit
- einer Spannungsquelle (U_{B}) zur Spannungsversorgung des Moduls und des Motors (GM),
- einer in einem ersten Signalpfad angeordneten Verpolschutzvorrichtung (T1) des Moduls, welche mit der Spannungsquelle (U_{B}) und dem in einem zweiten Signalpfad angeordneten Motor (GM) elektrisch verbunden ist, wobei der erste und der zweite Signalpfad parallel geschaltet sind,
- einer mit einer Betriebsspannung der Spannungsquelle (U_{B}) beaufschlagten Verpolschutzsteuerung (VS) zur Steuerung der Verpolschutzvorrichtung (T1) und
- einer Speichereinheit (C_{GI}) zum Speichern elektrischer Energie, insbesondere einem Kondensator, welche mit dem Motor (GM) und der Verpolschutzvorrichtung (T1) elektrisch verbunden ist, wobei die Speichereinheit (C_{GI}), der Motor (GM) und die Verpolschutzvorrichtung (T1) derart geschaltet sind, dass bei einer zu niedrigen Betriebsspannungsversorgung des Moduls durch die Spannungsquelle (U_{B}) ein Ausgang (A) der Verpolschutzsteuerung (VS) mit Massepotential verbunden ist und die mit dem Ausgang (A) elektrisch verbundene Verpolschutzvorrichtung (T1) den ersten Signalpfad, in dem die Verpolschutzvorrichtung (T1) geschaltet ist, sperrt und eine Aufladung der Speichereinheit (C_{GI}) über den zweiten Signalpfad mittels des Freilaufstroms des Motors (GM) zur Erzeugung der erforderlichen Betriebsspannung des Moduls erfolgt.

2. Modul nach Anspruch 1, **dadurch** gekenntzeichnet, dass der Motor (GM), die Verpolschutzvorrichtung (T1) und die Speichereinheit (C_{GI}) mit einem ersten Schaltungsknoten (S1) elektrisch verbunden sind.

3. Modul nach einem der vorhergehenden Ansprüche, **dadurch gekennzeichnet, dass** die Spannungsquelle (U_{B}), der Motor (GM) und die Verpolschutzvorrichtung (T1) mit einem zweiten Schaltungsknoten (S2) elektrisch verbunden sind.

4. Modul nach einem der vorhergehenden Ansprüche, **dadurch gekennzeichnet, dass** die Verpolschutzvorrichtung (T1) ein Transistor ist.

5. Modul nach einem der vorhergehenden Ansprüche, **dadurch gekennzeichnet, dass** der Motor (GM) mit einem zweiten Transistor (T2) elektrisch verbunden ist, mit dem die Drehzahl des Motors (GM) steuerbar ist.

6. Verfahren zum Verändern der Drehzahl eines Motors (GM), Insbesondere eines Gebläses einer Belüftung oder einer Heiz- und/oder Klimaanlage eines Kraftfahrzeuginnenraums, bei dem ein Modul und der Motor (GM) mit einer mittels einer Spannungsquelle (U_{B}) erzeugten Betriebsspannung versorgt werden und beim Unterschreiten der erforderlichen Betriebsspannung ein Freilaufstrom des Motors (GM) zum Erzeugen der für das Modul erforderlichen Betriebsspannung herangezogen wird, indem eine mit dem Motor (GM) elektrisch verbundene Speichereinheit (C_{GI}) zum Speichern elektrischer Energie, insbesondere ein Kondensator, mit dem Frellaufstrom geladen wird, **dadurch gekennzeichnet, dass** die Betriebsspannung an eine Verpolschutzsteuerung (VS) angelegt wird und beim Unterschreiten der Betriebsspannung des Moduls der Ausgang (A) der Verpolschutzsteuerung (VS) mit Massepotenzial verbunden wird und eine mit dem Ausgang (A) elektrisch verbundene Verpolschutzvorrichtung (T1) einen ersten Signalpfad, in dem die Verpolschutzvorrichtung (T1) geschaltet ist, sperrt, um die Speichereinheit (C_{GI}) mit dem Freilaufstrom des Motors (GM), welcher in einem zweiten, zum ersten Signalpfad parallel geschalteten Signalpfad angeordnet ist, aufzuladen.

7. Verfahren nach Anspruch 5, **dadurch gekennzeichnet, dass** die Speichereinheit (C_{GI}) mittels des Freilaufstroms des Motors (GM) solange geladen wird, bis die Spannung am Kondensator (C_{GI}) zumindest gleich der erforderlichen Betriebsspannung des Moduls ist.

8. Verfahren nach einem der Ansprüche 6 oder 7, **dadurch gekennzeichnet, dass** die Drehzahl des Motors (GM) durch eine pulsweitenmodulierte Spannung gesteuert wird.

## Claims

1. Module for varying the rotation speed of a motor (GM), in particular of a blower of a ventilation system or of a heating and/or air-conditioning system of a motor vehicle interior, having
- a voltage source (U_{B}) for supplying voltage to the module and to the motor (GM),
- a polarity-reversal protection apparatus (T1) of the module, which polarity-reversal protection apparatus is arranged in a first signal path and is electrically connected to the voltage source (U_{B}) and to the motor (GM) which is arranged in a second signal path, with the first and the second signal path being connected in parallel,
- a polarity-reversal protection control means (VS), which is supplied with an operating voltage from the voltage source (U_{B}), for controlling the polarity-reversal protection apparatus (T1), and
- a storage unit (C_{GI}) for storing electrical energy, in particular a capacitor, which storage unit is electrically connected to the motor (GM) and to the polarity-reversal protection apparatus (T1), with the storage unit (C_{GI}) , the motor (GM) and the polarity-reversal protection apparatus (T1) being connected in such a way that, when an excessively low operating voltage is supplied to the module by the voltage source (U_{B}), an output (A) of the polarity-reversal protection control means (VS) is connected to earth potential and the polarity-reversal protection apparatus (T1), which is electrically connected to the output (A), blocks the first signal path, in which the polarity-reversal protection apparatus (T1) is connected, and the storage unit (C_{GI}) is charged via the second signal path by means of the freewheeling current of the motor (GM) for generating the required operating voltage of the module.

2. Module according to Claim 1, **characterized in that** the motor (GM), the polarity-reversal protection apparatus (T1) and the storage unit (C_{GI}) are electrically connected to a first circuit node (S1).

3. Module according to either of the preceding claims, **characterized in that** the voltage source (U_{B}), the motor (GM) and the polarity-reversal protection apparatus (T1) are electrically connected to a second circuit node (S2).

4. Module according to one of the preceding claims, **characterized in that** the polarity-reversal protection apparatus (T1) is a transistor.

5. Module according to one of the preceding claims, **characterized in that** the motor (GM) is electrically connected to a second transistor (T2) with which the rotation speed of the motor (GM) can be controlled.

6. Method for varying the rotation speed of a motor (GM), in particular of a blower of a ventilation system or of a heating and/or air-conditioning system of a motor vehicle interior, in which method a module and the motor (GM) are supplied with an operating voltage which is generated by means of a voltage source (U_{B}) and, when the required operating voltage is undershot, a freewheeling current of the motor (GM) is used to generate the operating voltage which is required for the module by a storage unit (C_{GI}) which is electrically connected to the motor (GM), for storing electrical energy, in particular a capacitor, being charged with the freewheeling current, **characterized in that** the operating voltage is applied to a polarity-reversal protection control means (VS) and, when the operating voltage of the module is undershot, the output (A) of the polarity-reversal protection control means (VS) is connected to earth potential and a polarity-reversal protection apparatus (T1), which is electrically connected to the output (A), blocks a first signal path, in which the polarity-reversal protection apparatus (T1) is connected, in order to charge the storage unit (C_{GI}) with the freewheeling current of the motor (GM) which is arranged in a second signal path which is connected in parallel with the first signal path.

7. Method according to Claim 5, **characterized in that** the storage unit (C_{GI}) is charged by means of the freewheeling current of the motor (GM) until the voltage across the capacitor (C_{GI}) is at least equal to the required operating voltage of the module.

8. Method according to either of Claims 6 and 7, **characterized in that** the rotation speed of the motor (GM) is controlled by a pulse-width-modulated voltage.

## Revendications

1. Module pour modifier la vitesse de rotation d'un moteur (GM), notamment d'une soufflerie d'un dispositif de ventilation ou d'une installation de chauffage et/ou de climatisation de l'habitacle d'un véhicule automobile, comprenant
- une source de tension (U_{B}) pour l'alimentation électrique du module et du moteur (GM),
- un dispositif de protection contre les inversions de polarité (T1) du module, disposé dans un premier trajet de signal, lequel est relié électriquement avec la source de tension (U_{B}) et avec le moteur (GM) disposé dans un deuxième trajet de signal, le premier et le deuxième trajet de signal étant branchés en parallèle,
- une commande de protection contre les inversions de polarité (VS), exposée à une tension de service de la source de tension (U_{B}), destinée à commander le dispositif de protection contre les inversions de polarité (T1) et
- une unité d'accumulation (C_{GI}) pour accumuler de l'énergie électrique, notamment un condensateur, qui est reliée électriquement avec le moteur (GM) et le dispositif de protection contre les inversions de polarité (T1), l'unité d'accumulation (C_{GI}), le moteur (GM) et le dispositif de protection contre les inversions de polarité (T1) étant branchés de telle sorte que lorsque l'alimentation en tension de service du module par la source de tension (U_{B}) est insuffisante, une sortie (A) de la commande de protection contre les inversions de polarité (VS) est reliée avec le potentiel de masse et le dispositif de protection contre les inversions de polarité (T1) relié électriquement avec la sortie (A) bloque le premier trajet de signal, dans lequel est branché le dispositif de protection contre les inversions de polarité (T1), et une charge de l'unité d'accumulation (C_{GI}) a lieu par le biais du deuxième trajet de signal au moyen du courant de roue libre du moteur (GM) en vue de générer la tension de service nécessaire du module.

2. Module selon la revendication 1, **caractérisé en ce que** le moteur (GM), le dispositif de protection contre les inversions de polarité (T1) et l'unité d'accumulation (C_{GI}) sont reliés électriquement avec un premier noeud de commutation (S1).

3. Module selon l'une des revendications précédentes, **caractérisé en ce que** la source de tension (U_{B}), le moteur (GM) et le dispositif de protection contre les inversions de polarité (T1) sont reliés électriquement avec un deuxième noeud de commutation (S2).

4. Module selon l'une des revendications précédentes, **caractérisé en ce que** le dispositif de protection contre les inversions de polarité (T1) est un transistor.

5. Module selon l'une des revendications précédentes, **caractérisé en ce que** le moteur (GM) est relié électriquement avec un deuxième transistor (T2) avec lequel peut être commandée la vitesse de rotation du moteur (GM).

6. Procédé pour modifier la vitesse de rotation d'un moteur (GM), notamment d'une soufflerie d'un dispositif de ventilation ou d'une installation de chauffage et/ou de climatisation de l'habitacle d'un véhicule automobile, selon lequel un module et le moteur (GM) sont alimentés avec une tension de service générée au moyen d'une source de tension (U_{B}) et, si la tension devient inférieure à la tension de service requise, un courant de roue libre du moteur (GM) est utilisé pour générer la tension de service nécessaire pour le module en ce qu'une unité d'accumulation (C_{GI}) reliée électriquement avec le moteur (GM) et destinée à accumuler de l'énergie électrique, notamment un condensateur, est chargée avec le courant de roue libre, **caractérisé en ce que** la tension de service est appliquée à une commande de protection contre les inversions de polarité (VS) et, lorsque la tension devient inférieure à la tension de service du module, la sortie (A) de la commande de protection contre les inversions de polarité (VS) est reliée avec le potentiel de masse et un dispositif de protection contre les inversions de polarité (T1) relié électriquement avec la sortie (A) bloque un premier trajet de signal, dans lequel est branché le dispositif de protection contre les inversions de polarité (T1), afin de charger l'unité d'accumulation (C_{GI}) avec le courant de roue libre du moteur (GM), lequel est disposé dans un deuxième trajet de signal branché en parallèle avec le premier trajet de signal.

7. Procédé selon la revendication 5, **caractérisé en ce que** l'unité d'accumulation (C_{GI}) est chargée au moyen du courant de roue libre du moteur (GM) jusqu'à ce que la tension aux bornes du condensateur (C_{GI}) soit au moins égale à la tension de service requise du module.

8. Procédé selon l'une des revendications 6 ou 7, **caractérisé en ce que** la vitesse de rotation du moteur (GM) est commandée par une tension modulée en largeur d'impulsion.
